# FASCICULE DE BREVET EUROPEEN

(11) **EP 2 571 449 B1**
(45) Date de publication et mention de la délivrance du brevet: **10.06.2020**
(21) Numéro de dépôt: 11727217.9
(22) Date de dépôt: 17.05.2011
(51) Int. Cl.: A61C 7/14

(54) **ENSEMBLE FORMÉ PAR UN GABARIT INDIVIDUALISÉ, UNE BASE INDIVIDUALISÉE ET UNE ATTACHE**
ANORDNUNG EINER PERSONALISIERTEN VORRICHTUNG, EINER PERSONALISIERTEN BASIS UND KLAMMER
AN ASSEMBLY FORMED BY CUSTOMISED JIG, A CUSTOMISED BASE AND A BRACKET

(30) Priorité: 17.05.2010 FR 1053777
(43) Date de publication de la demande: 27.03.2013
(73) Titulaire: American Orthodontics Corporation, Sheboygan, WI 53081-1048 (US)
(72) Inventeur: CURIEL, Patrick, 92200 Neuilly Sur Seine (FR); AYACHE, William, 92200 Neuilly Sur Seine (FR); SALAH, Philippe, 75020 Paris (FR)
(74) Mandataire: Von Rohr Patentanwälte Partnerschaft mbB
(86) Numéro de dépôt international: PCT/FR2011/051099
(87) Numéro de publication internationale: WO 2011/144857

(56) Documents cités:
- US-A- 5 863 198
- US-A- 5 879 158
- US-A1- 2007 031 775
- US-A1- 2007 087 302

## Description

L'invention concerne un ensemble conformément au préambule de la revendication 1.

Classiquement, de tels appareils comportent :
- au moins un arc orthodontique, autrement dit un fil métallique exerçant sur les dents un effort tendant à les amener, à partir de leur position initiale insatisfaisante, dite « mal position », à une position finale satisfaisante, dite « position corrigée » ;
- et une série d'attaches, dites aussi couramment « brackets », pourvues chacune d'au moins une gorge pour la réception d'un arc orthodontique ; ces attaches sont fixées individuellement sur les dents du patient, dans une position déterminée permettant à l'arc orthodontique de transférer sur les dents les efforts de rotation nécessaires pour qu'elles passent de la mal position à la position corrigée pendant le traitement.

Le plus couramment, un ou plusieurs arcs orthodontiques, et avec lui ou eux une seule série d'attaches comportant chacune une ou plusieurs gorges, sont utilisés.

Les techniques orthodontiques linguales, qui ont l'avantage esthétique de laisser l'appareillage pratiquement invisible depuis l'extérieur, ont commencé à se développer vers 1970. Mais à l'époque elles reposaient sur une conception et une fabrication entièrement manuelle des appareils et leur mise en œuvre était d'une très grande complexité. En effet, un élément important de la réussite du traitement est le bon positionnement de l'attache et de sa gorge sur la dent, notamment par rapport à son centre de rotation. En effet, ce positionnement détermine l'orientation des efforts qui sont imposés à la dent correspondante, et donc les orientations de la dent dans les différentes directions de l'espace lorsqu'elle se trouvera en position finale corrigée. Ce positionnement est beaucoup plus délicat à réaliser en technique linguale qu'en technique dite labiale ou vestibulaire (où l'appareillage est disposé sur la face antérieure des dents), du fait de l'angulation importante des faces postérieures des dents. Cette angulation éloigne davantage le centre de rotation de la dent par rapport à l'attache que dans le cas d'une technique labiale. Cela fait qu'une légère erreur de positionnement de l'attache peut placer la gorge dans une mauvaise position, en rendant l'appareillage incapable d'assurer la correction souhaitée de la position de la dent.

Il est donc particulièrement important de positionner très précisément les attaches, en particulier sur les incisives et les canines dont les formes des faces internes sont plus complexes et variables que celles des prémolaires et molaires.

De manière habituelle, ce positionnement est réalisé par des dispositifs appelés couramment « jigs » (gabarits) par les orthodontistes, dont un exemple est décrit dans le document US-A-2009/0136890. Ce gabarit est constitué par un bloc en matière plastique pourvu, sur sa face inférieure ou supérieure, d'un logement dont la configuration le rend adapté à ce que l'extrémité d'une dent donnée vienne s'y insérer. Cette insertion n'est possible de manière précise et efficace pour la réussite du traitement que si la morphologie de chaque dent a été préalablement numérisée individuellement à partir d'une empreinte de l'arcade du patient, et si cette morphologie a été introduite numériquement dans le logiciel de commande d'un appareillage de fabrication du bloc. De cette façon, on réalise le bloc en y pratiquant une cavité dans laquelle l'extrémité de la dent vient exactement s'insérer. Le bloc comporte également un élément porteur en forme de crochet comportant trois sections consécutives formant entre elles des angles droits. Une première section traverse le bloc de manière coulissante dans un orifice adapté. Une troisième section a son extrémité conformée pour être insérable dans la gorge d'une attache de manière à la maintenir pendant la pose de l'attache et à s'en dégager facilement une fois l'attache déposée. La deuxième section relie les deux autres. Pour poser l'attache, on la place à l'extrémité de l'élément porteur, on coiffe la dent avec le bloc, et on exerce une traction sur l'élément porteur pour plaquer la semelle de l'attache contre la base préalablement munie d'une colle orthodontiques. Une fois la colle polymérisée, l'élément porteur est dégagé de l'attache et le bloc est retiré.

Ce dispositif présente cependant un certain nombre d'inconvénients. Ces blocs et éléments porteurs sont encombrants, ce qui rend leur pose difficile, et désagréable pour le patient. De plus, la précision du positionnement de l'attache n'est pas toujours suffisante. D'une part, le bloc n'englobe que la partie supérieure de la dent, puisqu'il ne peut pas couvrir une partie importante de la face postérieure pour ne pas gêner la pose de l'attache. Il s'ensuit qu'il peut y avoir un jeu relativement important dans le positionnement du bloc lors de l'opération. D'autre part, la structure multipièces du dispositif fait que les imprécisions de conception et de fabrication des différents composants se cumulent.

Document US-A-2007/0087302 décrit des gabarits. Selon US-A-2007/0087302, on positionne une attache sur un gabarit avant de placer l'ensemble sur une dent.

Document US-A-5,879,158 décrit un gabarit individualisé destiné à recevoir et s'engrener avec une attache orthodontique pour l'insertion sur une dent. Le gabarit comprend des évidements supérieur et inférieur et une partie de doigt disposée entre les deux évidements. Les évidements supérieur et inférieur accueillent des projections de l'attache, tandis que la partie de doigt de gabarit forme une fente entre les projections supérieure et inférieure de l'attache. La partie doigt de gabarit s'adapte à une fente de l'attache. C'est par la fente de l'attache que la dent est positionnée.

Document US-A-5,863,198 décrit un gabarit et une attache qui sont fixés l'un à l'autre par insertion d'une protubérance du gabarit dans la rainure de l'attache.

Document US-A-2007/031775 décrit des gabarits comparables aux gabarits décrits dans les documents US-A-2007/0087302, US-A-5,879,158 et US-A-5,863,198.

Le but de l'invention est de proposer un nouvel ensemble formé par une gabarit individualisé, une base individualisé et une attache, exempts des inconvénients précités et autorisant un positionnement très précis de l'attache avec un minimum de gêne pour le patient et d'ergonomie d'utilisation pour le praticien lors de la pose.

A cet effet, l'invention a pour objet un ensemble formé par une base individualisée portant une attache, destinés à être inclus dans un appareillage orthodontique, et un gabarit individualisé, destiné à assurer un positionnement précis de la base sur une dent d'un patient, dans lequel la dent comporte un bord libre et des faces antérieure et postérieure, dans lequel le gabarit est un capuchon qui coiffe ladite dent en recouvrant son bord libre et au moins des portions de ses faces antérieure et postérieure, caractérisé en ce que le gabarit comporte un logement destiné à entourer la base sur une portion d'au moins un de ses bords latéraux et au moins une portion de son bord longitudinal destinée à être située le plus près du bord libre de la dent, de manière à ce que la base portant l'attache puisse être insérée dans le logement.

Le gabarit a une forme telle qu'il peut épouser la base sur au moins une portion d'au moins un de ses bords.

Il peut comporter des moyens de préhension par le praticien pour sa mise en place.

Il peut comporter des moyens permettant de lui solidariser la base qu'il entoure, avant leur mise en place sur la dent, et de l'en désolidariser après la fixation de la base sur la dent.

Ladite base peut faire partie d'un appareillage orthodontique lingual.

Ladite base peut faire partie d'un appareillage orthodontique vestibulaire.

Un procédé de conception d'un gabarit individualisé du type précédent, comporte les étapes suivantes:
- on réalise un moulage d'une empreinte de l'arcade et des dents du patient en malposition ;
- on réalise un modèle occlusal prévisionnel matériel ou virtuel de ce moulage ;
- si le modèle occlusal prévisionnel est matériel on en réalise une image informatique ;
- on conçoit numériquement pour chaque dent à traiter un ensemble formé par une base et une attache, destiné à être intégré à un appareillage orthodontique ;
- et on conçoit numériquement pour chaque dent à traiter un capuchon destiné à coiffer la dent en s'étendant sur au moins des portions respectives des faces antérieure et postérieure de la dent.

On peut soustraire numériquement du capuchon un espace dont le contour correspond au contour de la base précédemment conçue pour ladite dent.

Un procédé de conception d'un gabarit individualisé du type précédent comporte les étapes suivantes:
- on réalise un moulage d'une empreinte de l'arcade et des dents du patient en malposition ;
- on réalise une image informatique de ce moulage ;
- on conçoit numériquement pour chaque dent à traiter un ensemble formé par une base et une attache, destiné à être intégré à un appareillage orthodontique ;
- on conçoit numériquement pour chaque dent à traiter un capuchon destiné à coiffer la dent en s'étendant sur au moins des portions respectives des faces antérieure et postérieure de la dent.

On peut soustraire numériquement du capuchon un espace dont le contour correspond au contour de la base précédemment conçue pour ladite dent.

Un procédé de réalisation d'un gabarit du type précédent peut concevoir numériquement ledit gabarit selon l'un des procédés précédents.

Un procédé de réalisation d'un gabarit du type précédent, peut concevoir numériquement et fabrique l'ensemble de l'appareil orthodontique dont l'attache correspondant audit gabarit doit faire partie, on positionne ledit appareil sur un modèle occlusal prévisionnel matériel ou sur une empreinte de l'arcade et des dents du patient en malposition, on réalise une numérisation de l'ensemble formé par ledit appareil et ledit modèle occlusal prévisionnel ou ladite empreinte, on conçoit numériquement ledit gabarit à partir de ladite numérisation et on réalise ledit gabarit, par exemple par frittage laser par prototypage rapide.

Comme on l'aura compris, le gabarit individualisé selon l'invention présente les caractéristiques suivantes :
- le gabarit coiffe la dent concernée en recouvrant son bord libre et au moins des portions de ses faces antérieure et postérieure ;
- le gabarit a une forme telle qu'il peut épouser la base sur une portion d'au moins un de ses bords, par exemple sur une partie d'un de ses bords mésio-distaux (bords latéraux), ou sur une partie de ses deux bords mésio-distaux, ou sur au moins une partie de son bord occlusal (longitudinal) proche du bord libre de la dent ; on peut ainsi assurer un positionnement relatif précis du gabarit et de la base, sur laquelle l'attache a été préalablement fixée ou intégrée de construction ;
- dans un exemple particulier de réalisation, il comporte des moyens de fixation, par exemple par clippage, de la base sur le gabarit, permettant leur désolidarisation après la pose de l'ensemble base-attache.

L'invention sera mieux comprise à la lecture de la description qui suit, donnée en référence aux figures annexées suivantes :
- la figure 1 qui montre un premier exemple de configuration d'un gabarit selon l'invention et la base qui lui est fixée pour être positionnée sur une dent ;
- la figure 2 qui montre un autre exemple de configuration d'un gabarit selon l'invention, avec la base qui lui est associée ;
- la figure 3 qui montre un exemple ne faisant pas partie de l'invention ;
- la figure 4 qui montre une autre configuration de gabarit selon l'invention, qui est en fait identique à la moitié d'un gabarit selon la figure 1, et est destiné à être employé sur des dents difficilement accessibles ;
- la figure 5 qui montre de profil une variante de l'invention où le gabarit possède un dispositif facilitant sa préhension par le praticien.

Un exemple non limitatif de mise en œuvre un procédé de conception d'un gabarit individualisé du type selon l'invention va être à présent décrit.

On commence par réaliser un moulage en plâtre d'une empreinte de l'arcade et des dents du patient en mal position. Puis, de manière connue, on réalise ce que les orthodontistes appellent un « set-up » ou « modèle occlusal prévisionnel », c'est-à-dire une représentation matérielle de l'arcade et des dents placées dans leurs positions corrigées visées. A cet effet, les dents du moulage précédent sont découpées une à une et replacées dans leurs positions corrigées visées respectives.

Puis on réalise une image informatique de ce set up.

En variante, il va de soi que le modèle occlusal prévisionnel peut être réalisé de façon totalement virtuelle, ce qui ne change en rien le principe de la conception du gabarit et de son utilisation.

Puis, selon des procédés connus, par exemple dans les documents WO-A-03/068099 ou WO-A-2009/056776, on conçoit numériquement pour chaque dent un ensemble formé par une base et une attache. Une face de la base épouse la face interne de la dent, et l'attache est fixée sur l'autre face de la base dans une position choisie. Selon différents procédés, qui peuvent être indifféremment mis en oeuvre, on peut notamment retenir les solutions suivantes :
- l'attache peut être une attache « de série », c'est-à-dire avoir une forme et des dimensions standardisées, et être prélevée, lors de la conception de l'appareillage, dans une bibliothèque informatique d'attaches ;
- ou l'attache peut être conçue et réalisée « sur mesure ».

On peut prévoir également une pièce intermédiaire entre l'attache et la base, dont la géométrie correspond à l'espace qui, sans elle, serait laissé libre à la fin du traitement entre la dent correspondante dans sa position corrigée et l'arc orthodontique qui passera dans les gorges des attaches lors du traitement et aura retrouvé sa forme initiale en fin de traitement (voir WO-A-2009/056776).

Il est indifférent que les bases et les attaches et les éventuelles pièces intermédiaires soient conçues et fabriquées séparément ou soient conçues et fabriquées comme des pièces uniques fusionnées les unes aux autres. L'essentiel est que la conception numérique de l'appareillage, qui inclut aussi la configuration de l'arc orthodontique (qui peut être du type dit « straight wire » et, donc, s'étendre sensiblement dans un plan unique, ou peut s'étendre dans les trois directions de l'espace), aboutisse à une définition de la forme et des dimensions de l'ensemble comportant les bases et les attaches procurant un positionnement correct des gorges des attaches sur chaque dent pour que, en liaison avec l'arc orthodontique, les dents soient chacune amenées à leur position corrigée à la fin du traitement, et à une définition des contours de la base.

Puis on réalise la conception des gabarits de la manière suivante. On conçoit un capuchon destiné à venir coiffer la dent en s'étendant sur au moins des portions respectives des faces antérieure et postérieure de la dent. Puis on soustrait numériquement de la partie du capuchon destinée à s'étendre sur la face postérieure de la dent un espace dont le contour correspond au contour de la base précédemment conçue. Le résultat de cette soustraction est la configuration externe qu'il faut donner au gabarit pour que, après avoir solidarisé à un gabarit la base et l'attache qu'elle porte, et après avoir mis le gabarit en position sur la dent, la base se retrouve sur la face postérieure de la dent dans la position exacte visée, avec une grande précision. La colle ou tout autre moyen de solidarisation dont la base a été préalablement enduite permet de fixer la base sur la dent, et après cette fixation, le gabarit peut être retiré.

En variante, on peut concevoir directement le bord du gabarit qui vient épouser la base, donc sans réaliser l'opération de soustraction que l'on vient de citer.

La base peut être fixée au gabarit par clippage ou tout autre moyen avant l'installation du gabarit sur la dent. Les configurations exactes de la base et du gabarit peuvent être adaptées pour permettre cette fixation. Cela dit, il n'est pas obligatoire de fixer la base sur le gabarit préalablement à l'installation du gabarit sur la dent. On peut aussi parfaitement procéder d'abord à l'installation du gabarit sur la dent, puis appliquer la base sur la dent en la faisant venir en butée contre les bords de l'espace ménagé à cet effet dans le gabarit.

Optimalement, le gabarit est réalisé par un procédé de prototypage rapide par frittage laser, avec une précision dimensionnelle qui est de l'ordre de 20µm. D'autres procédés de prototype rapide peuvent être utilisés, par exemple le prototypage plastique, le prototypage cire perdue. Le frittage laser offre aujourd'hui les meilleures précisions.

Le gabarit selon l'invention présente l'avantage par rapport aux gabarits de l'art antérieur, outre de garantir une excellente précision du positionnement de l'ensemble base-attache, d'être très peu encombrant en bouche. On peut, en effet, conférer à ses parois une très faible épaisseur, inférieure à 1mm (par exemple 0,6mm). Par rapport aux gabarits en forme de blocs de l'art antérieur (US-A-2009/0136898), ils sont beaucoup plus compacts et donc d'autant moins gênants pour le patient lors de la pose de l'appareil orthodontique, et laissent à l'orthodontiste plus de place pour implanter les bases sur les autres dents sans retirer au préalable les gabarits déjà posés.

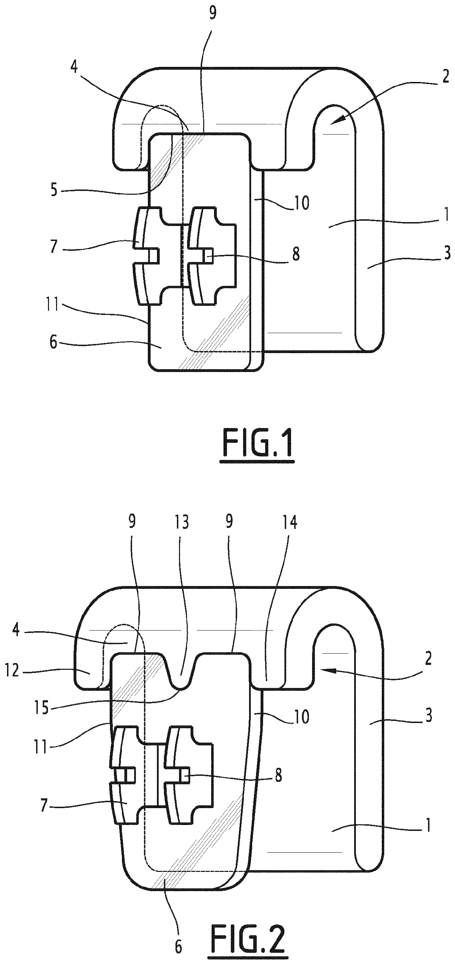

Figures 1, 2, 4 et 5 montrent schématiquement des exemples de configuration de gabarits selon l'invention.

La figure 1 montre un gabarit 1 destiné à venir coiffer une incisive non représentée, qui doit être logée dans l'espace 2 défini entre la partie antérieure 3 et la partie postérieure 4 du gabarit. Il doit être entendu que la forme de l'espace 2 telle que représentée sur les figures n'est que très schématique et simplifiée par rapport à sa forme réelle qui correspond exactement à celle d'une dent. La partie antérieure 3 couvre, dans l'exemple représenté, une fraction relativement importante de la face antérieure de la dent. La partie postérieure 4 du gabarit présente, selon l'invention, une échancrure 5 dont les contours sont adaptés pour que la base 6 destinée à être implantée sur la dent, et qui porte une attache 7 munie d'une gorge 8 pour l'insertion de l'arc orthodontique, puisse venir s'y loger, par exemple par clippage. Comme on l'a dit, la configuration de cette échancrure 5 peut avoir été obtenue par soustraction numérique lors de la conception de l'appareillage ou par conception directe.

Dans le cas selon la figure 1, l'échancrure 5 forme un logement emprisonnant le bord supérieur 9 et une portion de chaque bord latéral 10, 11 de la base 6.

Dans le cas représenté sur la figure 2, on a conféré à la face postérieure 4 du gabarit 1 une forme de « trident » dont les pointes 12, 13,14 définissent un logement pour la base 6. Le bord supérieur 9 de la base 6 présente une échancrure centrale 15 recevant la pointe centrale 13 du trident, les pointes latérales 12, 14 du trident encadrant les bords latéraux 10, 11 de la base 6 sur une portion de leur partie supérieure.

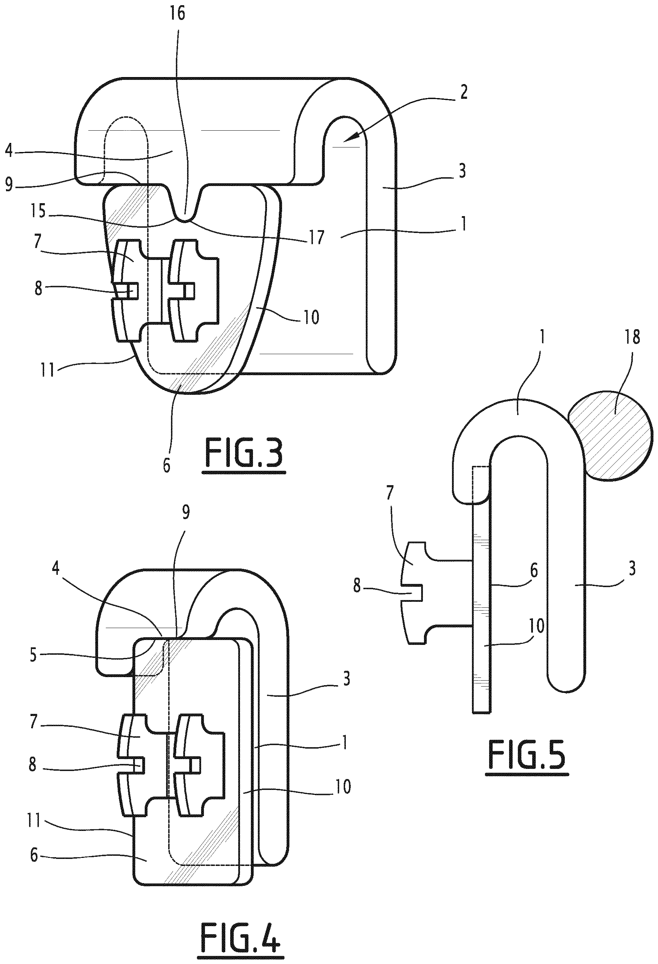

Dans le cas représenté sur la figure 3, qui montre un exemple ne faisant pas partie de l'invention, le gabarit 1 est comparable à celui de la figure 2, à ceci près que sa face postérieure 4 comporte seulement une pointe 16 sur laquelle vient se placer une échancrure 17 pratiquée dans le bord supérieur 9 de la base 6. Les bords latéraux 10, 11 de la base 6 sont laissés entièrement libres de tout contact avec le gabarit 1.

Dans la variante représentée sur la figure 4, le gabarit 1 est identique dans son principe à celui de la figure 1, à ceci près qu'il n'est conçu que pour recouvrir sensiblement une moitié longitudinale de la dent. Autrement dit, seuls un bord latéral 11 et la moitié du bord supérieur 9 de la base 6 sont au contact du gabarit. Une telle configuration peut avantageusement être utilisée lorsque la dent correspondante du patient, dans sa mal position, présente un recouvrement important avec une dent voisine qui ne laisserait pas la place d'implanter un gabarit 1 selon la figure 1. Les autres exemples des figures 2 et 3 peuvent également, de manière évidente pour l'homme du métier, être adaptés d'une manière semblable si l'espace manque pour implanter des gabarits tels que représentés. Le gabarit 1 ainsi modifié peut avoir une largeur un peu supérieure ou un peu inférieure à la moitié de la dent, selon l'espace disponible pour l'implanter ou d'autres contraintes auxquelles la conception du gabarit serait soumise.

La description qui a été faite concerne un gabarit destiné à mettre en place une base et son attache destinées à faire partie d'un appareillage orthodontique en technique linguale. Mais l'invention pourrait être utilisée en technique vestibulaire, avec des adaptations évidentes pour l'homme du métier.

Il doit être entendu que la base 6 peut être de faibles dimensions, notamment en épaisseur, surtout pour les attaches 7 destinées aux appareils utilisés en technique vestibulaire.

Dans la variante représentée sur la figure 5, le gabarit 1 présente sur sa face antérieure une boule 18 qui sert d'organe de préhension facilitant la manipulation du gabarit 1 par le chirurgien. Cet organe de préhension peut aussi prendre une autre forme quelconque : anneau, barre, cube... ou toute forme plus complexe permettant la préhension du gabarit 1 par un instrument. Il peut être implanté à n'importe quel endroit de la face antérieure (ou postérieure pour les gabarits utilisés en technique vestibulaire), à un emplacement où il ne se trouvera pas en contact avec les dents et/ou les gabarits voisins.

La réalisation totalement « sur mesure » de l'ensemble du gabarit permet dans tous les cas, si le praticien le souhaite, de poser les attaches en première intention, c'est-à-dire une pose effectuée lors de la phase initiale du traitement. Cette particularité évitera au praticien, dans un certain nombre de cas de différer la pose d'une ou plusieurs attaches sur les dents les plus difficilement accessibles. Le traitement s'en trouve ainsi significativement accéléré.

En variante, la conception du gabarit peut être réalisée non à partir d'un modèle occlusal prévisionnel, mais à partir d'un moulage de l'arcade avec les dents en malposition. Cela présente l'avantage de mieux mettre en évidence les espaces disponibles pour implanter les gabarits, et en déduire la nécessité ou non de leur conférer une forme particulière telle que celle représentée sur la figure 4, ainsi que la meilleure position de l'organe de préhension éventuel.

Une autre variante consiste à concevoir et fabriquer entièrement l'appareil orthodontique (attaches, bases et arc orthodontique selon, par exemple, les principes décrits dans le document WO-A-2009/056776, à le positionner sur un modèle occlusal prévisionnel matériel ou sur le moulage de l'arcade avec les dents en malposition, puis à numériser l'ensemble, puis à concevoir les gabarits selon l'invention à partir de cette image numérisée. Enfin on fabrique les gabarits par l'un des procédés qui ont été décrits.

## Revendications

1. Ensemble formé par une base (6) individualisée portant une attache (7), destinée à être incluse dans un appareillage orthodontique, et un gabarit (1) individualisé, destiné à assurer un positionnement précis de la base (6) sur une dent d'un patient,
dans lequel la dent comporte un bord libre et des faces antérieure et postérieure, dans lequel le gabarit (1) est un capuchon qui coiffe ladite dent en recouvrant son bord libre et au moins des portions de ses faces antérieure et postérieure,
dans lequel une face de la base (6) est destinée à épouser la face postérieure de ladite dent, et l'attache (7) est fixée sur l'autre face de la base (6) dans une position choisie;
**caractérisé en ce que**
le gabarit (1) comporte un logement (5) destiné à entourer la base (6) que sur une portion d'au moins un de ses bords latéraux (10, 11) et au moins une portion de son bord longitudinal (9) destinée à être située le plus près du bord libre de la dent, de manière à ce que la base (6) puisse être insérée dans le logement (5).

2. Ensemble selon la revendication 1, **caractérisé en ce que** le gabarit (1) comporte un organe de préhension, en particulier une boule (18), facilitant la manipulation du gabarit (1) par un praticien.

3. Ensemble selon la revendication 1 ou 2, **caractérisé en ce que** le gabarit (1) comporte des moyens pour fixer, en particulier par clippage, la base (6) au gabarit (1), avant installer le gabarit (1) sur la dent.

4. Ensemble selon l'une quelconque des revendications 1 à 3, **caractérisé en ce que** ladite base (6) fait partie d'un appareillage orthodontique lingual.

5. Ensemble selon l'une quelconque des revendications 1 à 4, **caractérisé en ce que** ladite base (6) fait partie d'un appareillage orthodontique vestibulaire.

## Patentansprüche

1. Anordnung, gebildet aus einer individualisierten Basis (6), die ein Bracket (7) zur Aufnahme in eine kieferorthopädische Apparatur trägt, und einem individualisierten Montageblock (1) zur präzisen Positionierung der Basis (6) auf einem Zahn eines Patienten, wobei der Zahn eine freie Kante und eine vordere und hintere Fläche aufweist,
wobei der Montageblock (1) eine Kappe ist, die den Zahn bedeckt, indem sie seine freie Kante und mindestens Teile seiner vorderen und hinteren Fläche abdeckt,
wobei eine Fläche der Basis (6) dazu bestimmt ist, an die hintere Fläche des Zahnes zu passen, und das Bracket (7) an der anderen Fläche der Basis (6) in einer gewählten Position befestigt ist,
**dadurch gekennzeichnet, dass**
der Montageblock (1) eine Aufnahme (5) aufweist, um die Basis (6) nur auf einem Teil von mindestens einem ihrer Seitenränder (10, 11) und mindestens einem Teil ihres Längsrandes (9) zu umgeben, der dazu bestimmt ist, sich am nächsten an dem freien Rand des Zahnes zu befinden, so dass die Basis (6) in der Aufnahme (5) untergebracht werden kann.

2. Anordnung nach Anspruch 1, **dadurch gekennzeichnet, dass** der Montageblock (1) ein Greifelement umfasst, insbesondere eine Kugel (18), die die Handhabung der Einrichtung (1) durch einen Anwender erleichtert.

3. Anordnung nach Anspruch 1 oder 2, **dadurch gekennzeichnet, dass** der Montageblock (1) Mittel zur Befestigung, insbesondere zum Einklipsen, der Basis (6) an dem Montageblock (1) vor dem Anbringen des Montageblocks (1) auf dem Zahn umfasst.

4. Anordnung nach einem der Ansprüche 1 bis 3, **dadurch gekennzeichnet, dass** die Basis (6) Teil einer lingualen kieferorthopädischen Apparatur ist.

5. Anordnung nach einem der Ansprüche 1 bis 4, **dadurch gekennzeichnet, dass** die Basis (6) Teil einer vestibulären kieferorthopädischen Apparatur ist.

## Claims

1. An assembly formed by an individualized base (6) carrying a bracket (7) for inclusion in an orthodontic appliance and an individualized jig (1) for precisely positioning the base (6) on a tooth of a patient, wherein the tooth has a free edge and anterior and posterior faces,
wherein the jig (1) is a cap which covers said tooth by covering its free edge and at least portions of its anterior and posterior faces,
wherein one face of the base (6) is intended to espouse the posterior face of said tooth and the bracket (7) is fixed to the other face of the base (6) in a chosen position,
**characterized in that**
the jig (1) comprises a housing (5) for surrounding the base (6) only on a portion of at least one of its side edges (10, 11) and at least a portion of its longitudinal edge (9) intended to be located closest to the free edge of the tooth, such that the base (6) may be lodged in the housing (5).

2. An assembly according to claim 1, **characterized in that**
the jig (1) comprises a holding member, in particular a ball (18), facilitating manipulation of the jig (1) by a practitioner.

3. An assembly according to claim 1 or 2, **characterized in that**
the jig (1) comprises means for fixing, in particular clipping, the base (6) to the jig (1) before installing the jig (1) on the tooth.

4. An assembly according to any one of claims 1 to 3, **characterized in that** said base (6) is part of a lingual orthodontic appliance.

5. An assembly according to any one of claims 1 to 4, **characterized in that** said base (6) is part of a vestibular orthodontic appliance.
